# EUROPEAN PATENT SPECIFICATION

(11) **EP 1 950 234 B1**
(45) Date of publication and mention of the grant of the patent: **21.04.2010**
(21) Application number: 08000727.1
(22) Date of filing: 16.01.2008
(51) Int. Cl.: C08G 18/10, C08G 18/75, C08G 18/76

(54) **Polyurethanes cured with amines and their preparation**
Amingehärtete Polyurethane und deren Herstellung
Polyuréthanes durcis avec des amines et leur préparation

(30) Priority: 29.01.2007 EP 07001845
(43) Date of publication of application: 30.07.2008
(73) Proprietor: Bayer MaterialScience AG, 51368 Leverkusen (DE)
(72) Inventor: Krause, Jens, Dr., 51063 Köln (DE); Barnes, James-Michael, 53547 Breitscheid (DE); Schmidt, Manfred, Dr., 41540 Dormagen (DE); Hovestadt, Wieland, Dr., 42799 Leichlingen (DE)

(56) References cited:
- WO-A-94/13722
- WO-A-99/47577
- DE-A1-102004 022 683

## Description

This invention relates to castable polyurethane and/or polyurethane/urea elastomer compositions with improved processing characteristics, including longer pour life, reduced tendency to crack, and better health and safety aspects because they are free of toluene diisocyanate. Isocyanate-endcapped prepolymers are employed. Effective processes for the production of such prepolymers and elastomers are disclosed. These prepolyomers can substitute TDI-prepolymers including aliphatic isocyantes providing prepolymers with similar cure characteristic but better health and safety aspects.

Aromatic polyisocyanates are well known and are widely used in the preparation of polyurethane and polyurethane/urea elastomers. These aromatic diisocyanates generally include compositions such as 2,4-toluene diisocyanate (2,4-TDI), 2,6-toluene diisocyanate (2,6-TDI), 4,4'-methylene-bis-(phenylisocyanate) and 2,4'-methylene-bis-(phenylisocyanate) (4,4'-MDI and 2,4'-MDI) and the like. In the preparation of polyurethane and polyurethane/urea elastomers, the aromatic diisocyanates are reacted with a long chain (high molecular weight) polyol to produce a prepolymer containing free isocyanate groups. This prepolymer may then be chain extended with a short chain (low molecular weight) polyol or aromatic diamine to form a polyurethane or polyurethane/urea elastomer (known generically as polyurethane or urethane). A liquid mixture of prepolymer and curative polymerizes, increasing steadily in viscosity until finally a solid elastomer is formed.

Among the chain extenders or cross-linking agents (curatives) used, primary and secondary polyalcohols, aromatic diamines, and in particular 4,4'-methylene-bis-(2-chloroaniline) (MBOCA) are most common. The use of MBOCA allows the manufacture of urethane elastomers with good mechanical properties and acceptable processing times.

Although MBOCA is the most widely used chain-extender in the production of castable polyurethanes, it suffers from the disadvantage of decomposition at high temperatures, as well as being quite toxic and Ames positive. The negative features of MBOCA have prompted those in the polyurethane art to investigate alternate materials as chain-extenders. Examples of other amines that have been used include 3,3',5,5'-tetraisopropyl-4,4'-diaminodiphenylmethane and 3,5-dimethyl-3',5'-diisopropyl-4,4'-diaminophenylmethane, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin, 3,5-Diamino-4-chloro-benzoeacid-isobutylester (Baytec^{®} XL 1604, Bayer MaterialScience AG). While these amines do function as cross-linking agents, the resultant pot life of the polymer mixture is so short that no reasonable processing time for cast elastomers is possible.

Another curing agent used in the manufacture of polyurethanes is methylene dianiline (MDA), which is well-known to those in the art as a good curative if there is only aliphatic diisocyanate present. It has a much shorter pot life than MBOCA. This short pot life is exacerbated by the presence of toluene diisocyanate (TDI). There are also toxicity issues related to the use of MDA.

A different chain-extending agent for polyurethanes is 4,4'-methylene-bis-(3-chloro-2,6-diethylaniline) (MCDEA, available as Lonzacure, trademark of the Lonza Corporation). This curative material is reportedly lower in toxicity but much faster than MBOCA to react with isocyanates. (See Th. Voelker et al, Journal of Elastomers and Plastics, 20, 1988 and ibid, 30th Annual Polyurethane Technical/Marketing Conference, October, 1986.) Although this curative does react with isocyanate-terminated prepolymers (including TDI-based prepolymers or 2,4'-MDI-based prepolymers) to give elastomers with desirable properties, , they have a tendency to crack when undergoing polymerization.

The amount and presence of free, unreacted TDI monomer has other deleterious effects on the processing and manufacture of urethanes. A major problem with mono-nuclear aromatic diisocyanates, such as toluenediisocyanate, is that they are toxic and because of their low molecular weight tend to be quite volatile. Therefore, 2,4'-MDI-based prepolymers have much better health and safety aspects. Pure 4,4'-MDI-based prepolymers cured with amines, however, are much to fast.

US 5,077,371 discloses a prepolymer that is low in free TDI. US 4,182,825 also discusses polyether based prepolymers made from hydroxy terminated polyethers capped with toluene diisocyanate with the amount of unreacted TDI substantially reduced. These prepolymers can be further reacted with conventional organic diamines or polyol curatives to form polyurethanes. When combining the teachings of this patent with the use of MCDEA as a chain extender, the resulting solid elastomer goes through a gel stage having low strength which can allow cracking of the polymerization mass to occur. Conventional TDI prepolymers with higher levels of free TDI also yield the same unsatisfactory gel state.

Surprisingly, it has been found that certain prepolymers prepared with both 2,4'-MDI and an aliphatic diisocyanate can be used with 3,5-diamino-4-chlorobenzoacid isobutylester to give elastomers with much longer casting time thus providing more time and/or larger articles and/or reduced propensity to crack. This phenomena was only known for TDI-based prepolymers prepared with both TDI and an aliphatic diisocyanate (US 6,046297). The prepolymers also provide extended pour life and compared to TDI-based prepolymers known in this field much better health and safety aspects (MDI has a much lower vapor pressure) as they are free of toxic TDI. An example of aliphatic diisocyanate would be a mixture of the three geometric isomers of 1,1'-methylene-bis-(4-isocyanatocyclohexane), abbreviated collectively as "H12MDI." One such mixture of isomers is available commercially as Desmodur^{®} W (trademark of Bayer MaterialScience AG). These results are surprising.

These results will become clear in the following description and illustrative examples.

In accordance with the present invention, it has been discovered that castable polyurethane elastomers can be formulated with enhanced processing characteristics during the casting operation, including reduced tendency to crack, extended pour life, and free of toxic TDI. The invention discloses an isocyanate-terminated prepolymer prepared with both 2,4'-MDI and an aliphatic diisocyanate such as an isomeric mixture of 1,1'-methylene-bis-(4-isocyanatocyclohexane) [H12MDI, e.g. Desmodur^{®} W], said prepolymer being free of TDI monomer but providing same curing properties as prepolymers based on TDI. Other examples of aliphatic diisocyanate that may be employed include the various pure geometric isomers of H12MDI; isophorone diisocyanate (IPDI); 1,6-hexamethylene diisocynate (HDI) and 1,4-cyclohexane diisocyanate (CHDI) and mixtures thereof.

The prepolymer can be cured with an aromatic diamine curative such as 3,5-diamino-4-chlorobenzoacid isobutylester to provide castable urethane articles with the desirable properties of enhanced processing characteristics.

In the practice of this invention, an organic diisocyanate, such as 2,4'-MDI, is reacted with high molecular weight polyester or polyether polyols to produce a prepolymer. Preferably, a mixture of 2,4'-MDI with its isomers is used whereby the amount of 2,4'-MDI in the mixture is greater than 80%, preferably greater than 90% and most preferred greater than 97%. The advantage is that no purifying step (e.g. removing free isocyanate) has to be carried out.

High molecular weight polyols, namely polyether polyols or polyester polyols having a number average molecular weight of at least 250, are used to prepare the prepolymer of the instant invention. Molecular weight of about 500 to 4000 is preferred, with molecular weight of 1000 to 2000 being the most preferred. However, the molecular weight of the high molecular weight polyol may be as high as 10,000 as low as 250.

The preferred polyalkyleneether polyols may be represented by the general formula HO(RO)nH, wherein R is an alkylene radical and n is an integer large enough that the polyether polyol has a number average molecular weight of at least 250, preferably at least 500. These polyalkyleneether polyols are well-known components of polyurethane products and can be prepared by the polymerization of cyclic ethers (such as alkylene oxides) and glycols, dihydroxyethers, and the like by known methods.

The polyester polyols are prepared by reaction of dibasic acids (usually adipic acid but other components, such as glutaric, sebacic, or phthalic acid, may be present) with diols such as ethylene glycol, 1,2-propylene glycol, 1,4-butylene glycol, diethylene glycol, 1,6-hexanediol, and the like where linear polymer segments are required. Units of higher functionality such as glycerol, trimethylolpropane, pentaerythritol, sorbitol, and the like may be employed with either polyester polyols or polyether polyols if chain branching or ultimate cross-linking is sought.

Some polyester polyols employ caprolactone and dimerized unsaturated fatty acids in their manufacture. Another type of polyester of interest is that obtained by the addition polymerization of e-caprolactone in the presence of an initiator. Still other polyols that can be used are those having at least two hydroxyl groups and whose basic backbone is obtained by polymerization or copolymerization of such monomers as butadiene and isoprene monomers.

Preferred polyols of the current invention are polyalkylene ethers. Most preferred of this group of compounds include polytetramethylene ether glycols (PTMEG). Polycarbonatepolyols can also be used.

The total polyol blend portion of the instant invention can be a combination of high molecular weight polyol, as previously described, and low molecular weight polyol. An aliphatic glycol is the preferred low molecular weight polyol. Suitable aliphatic polyols are ethylene glycol, diethylene glycol, triethylene glycol, tetraethylene glycol, propylene glycol, dipropylene glycol, tripropylene glycol, neopentyl glycol, 1,3-butanediol, 1,4-butanediol, and the like.

The most preferred low molecular weight polyol is diethylene glycol. In general, the weight of the low molecular weight polyol should be no more than 20% of the combination of high molecular weight polyol and low molecular weight polyol. The preferred range is 0 to 15% of the combination; more preferred is 0-8%.

The 2,4'-MDI-based prepolymers are prepared by dissolving 2,4'-MDI used with any other conventional diisocyanates optionally used, adding the polyol or polyol blend, and maintaining the temperature from room temperature to temperatures as high as 150°C for times necessary to react all the available hydroxyl groups. Preferred reaction temperatures are 30°C to 100°C; more preferred are 50°C to 85°C.

Alternatively, the polyol can be provided, and the isocyanate is added thereto. Aliphatic diisocyanate, eg H12MDI, and/or prepolymer prepared with aliphatic diisocyanate, is then added to the 2,4'-MDI prepolymer.

If aliphatic diisocyanate monomer is to be added to the prepolymer, the preferred monomer is H12MDI or another diisocyanate monomer of comparatively high molecular weight, low volatility, and low toxicity. If more volatile aliphatic diisocyanates (eg 1,4-cyclohexane diisocyanate (CHDI), isophorone diisocyanate (IPDI), hexamethylene diisocyanate (HDI)) are employed, it is preferred that they be employed as their prepolymers to reduce their volatility. More preferably, the prepolymers of such volatile aliphatic diisocyanates as CHDI, HDI and IPDI could contain below about 0.4% by weight of free unreacted monomer. If necessary, free monomer can be removed by use of conventional separation techniques such as extraction, distillation, or absorption.

If prepolymer prepared from H12MDI (or other aliphatic diisocyanate) is to be added to the 2,4'-MDI prepolymer, the H12MDI prepolymer may be prepared in a manner similar to that for the 2,4'-MDI prepolymer. However, because of the slower reactivity with polyols of H12MDI versus 2,4'-MDI, higher reaction temperatures are employed. Preferred temperatures are 70°C to 140°C; more preferred are from 80°C to 130°C. Free H12MDI may optionally be removed from the prepolymer by the traditional separation processes previously mentioned.

In preparing a prepolymer with either aromatic or aliphatic diisocyanates, stoichiometric ratio of isocyanate groups to hydroxyl groups in the reactants should preferably be from 1.5/1 to 20/1 although somewhat lower and higher ratios are permissible. When the ratio is much lower, the molecular weight of the isocyanate-terminated polyurethane becomes so large that the viscosity of the mass makes mixing of chain extenders into the prepolymer relatively more difficult. A ratio of 2 isocyanate groups to one hydroxyl group is the theoretical ratio for the end-capping of a difunctional polyalkyleneether or ester polyol with a diisocyanate. An excess approaching the 20/1 ratio will result in high levels of free diisocyanate in the mixture, which must be subsequently removed at greater cost. The preferred range is 1.7/1 to 4/1 for prepolymers of 2,4'-MDI, and 2/1 to 12/1 for prepolymers of H12MDI or other aliphatic diisocyanates.

Representative aliphatic diisocyanates include the following, as examples: hexamethylene diisocyanate (HDI); 1,3-xylylene diisocyanate (XDI); 1,1,4,4-tetramethylxylylene diisocyanate in its para- or meta-isomer forms (p-TMXDI, m-TMXDI); isophorone diisocyanate (IPDI; 1,4-cyclohexane diisocyanate (CHDI); and the geometric isomers of 1 1'-methylene-bis-4(-isocyanatocyclohexane) (H12MDI). Preferred diisocyanates include H12MDI, CHDI, and IPDI. More preferred diisocyanates include H12MDI in its various isomeric forms, mixed or pure.

It is desired that about 30-95% of the isocyanate content of the final prepolymer be from the aromatic isocyanate monomer or prepolymer of the final composition, such as 2,4'-MDI. About 5-70% of the isocyanate should be from the aliphatic isocyanate monomer or prepolymer, for example, H12MDI.

The curative used for the prepolymer can be selected from a wide variety of conventional and well known organic diamine or polyol materials. Preferred materials are the aromatic diamines which are either low melting solids or liquids. Specifically preferred are the diamines, polyols, or blends thereof having a melting point below 120°C. These diamines or polyols are generally the present ones used in the industry as curatives for polyurethane. The selection of a curative is generally based on reactivity needs, property needs for a specific application, process condition needs, and pot life desired. Known catalysts may be used in conjunction with the curative.

As previously mentioned, the most preferred curative is MBOCA, 3,5-diamino-4-chlorobenzoacid isobutylester or MCDEA, or mixtures thereof. Other curatives, such as diethyltoluene diamine (DETDA), tertiary butyl toluene diamine (TBTDA), dimethylthio-toluene diamine (Ethacure™ 300 from Albemarle Corporation), trimethylene glycol di-p-amino- benzoate (Polacure™ 740 from Air Products and Chemicals Inc.), and 1,2-bis(2-aminophenylthio)ethane (Cyanacure from American Cyanamid Company) can be used in addition to the aforementioned prefered curatives.

For curing these prepolymers, the number of - NH₂ groups in the aromatic diamine component should be approximately equal to the number of - NCO groups in the prepolymer. A small variation is permissible but in general from about 80 to 120% of the stoichiometric equivalent should be used, preferably about 85 to 100%.

The reactivity of isocyanato groups with amino groups varies according to the structure to which the groups are attached. As is well known, as for example in US 2,620,516, some amines react very rapidly with some isocyanates while others react more slowly. In the latter case, it is optional to use catalysts to cause the reaction to proceed fast enough to make the product non-sticky within 30-180 seconds. However, more often it is preferable that the prepolymer/curative blend remains flowable (below 50 poise) for at least 120 seconds and more preferably for at least 180 seconds.

For some of the aromatic diamines, the temperature of the reaction or of the polyurethane reactants will need only be controlled in order to obtain the proper reaction time; thus, for a diamine that ordinarily would be too reactive, a catalyst would be unnecessary; a lowering of the reaction temperature would suffice. A great variety of catalysts is available commercially for accelerating the reaction of the isocyanato groups with compounds containing active hydrogen atoms (as determined by the well-known Zerewitinoff test). It is well within the skill of the technician in this field to select catalysts to fit particular needs and adjust the amounts used to further refine the conditions. Adipic acid, oleic acid and triethylene diamine (available under the trademark Dabco™ from AirProducts and Chemicals, Inc.) are typical of suitable catalysts.

The polyurethanes and the prepolymers used can be additionally stabilized using auxiliary agents such as acid stabilizers, e.g. chloropropionic acid, dialkylphosphates, p-toluene sulfonic acid, or acid chlorides, e.g. benzoe acid chloride, phthalic acid dichloride, and antioxidants, e.g. Ionol^{®} and Stabaxol^{®} , phosphites and further stabilizers generally known in the art. Said stabilizers are used in amounts smaller than 0.5 wt.-% (based on the total amount of the polyurethane or the prepolymer used).

The urethane products will find use in industrial applications that require durable physical and mechanical properties in the final elastomers. Industrial rolls such as paper mill rolls, industrial wheels, and industrial tires are applications that require such properties.

The following examples are meant for illustrative purposes only and are not intended to limit the scope of this invention in any manner whatsoever.

### EXAMPLES

### Preparation of Prepolymers :

Liquid MDI with an amount of 2,4'-MDI of 97% (Desmodur^{®} 24M from Bayer MaterialScience AG) was stirred at 50°C under dry nitrogen. Polyol was added, and the mixture was stirred for 3-6 hours at approximately 80°C. The NCO content was measured.
Polyol 1: Polytetrahydrofuran; Terathane^{®} 1000 from Invista; OH-number 112 mgKOH/g polyol
Polyol 2: Polyesterpolyol with an OH-number 56 mgKOH/g polyol; based on adipic acid and ethyleneglycol (Desmophen^{®} 2000MZ from Bayer MaterialScience AG)

Amounts used and measured data can be found in Table 1.

**Table 1 (comparative prepolymers):**

| Example | 2,4'-MDI [wt.-%] | Polyol 1 [wt.-%] | Polyol 2 [wt.-%] | Stirring time in hours | NCO [wt.-%] | Viscosity at 70°C [mPas] |
|---|---|---|---|---|---|---|
| A1 | 29,53 | 70,47 | --- | 3 | 3,81 | 2600 |
| A2 | 34,29 | 65,71 | --- | 3 | 5,86 | 1140 |
| A3 | 39,06 | 60,94 | --- | 3 | 7,79 | 670 |
| A4 | 21,54 | --- | 78,46 | 4 | 3,98 | 3200 |

### Preparation of Prepolymers (according to the invention):

The prepolymer A1 or A4 was stirred for 1 hour at 80°C under dry nitrogen with Desmodur^{®} W from Bayer MateriaIScience AG (H12 MDI).

Amounts used and measured data can be found in Table 2.

**Table 2 (prepolymers according to the invention):**

| Example | Prepolymer [wt.-%] | Desmodur^{®} W [Wt.-%] | NCO [wt.-%] | Viscosity at 70°C [mPas] |
|---|---|---|---|---|
| B 1 | 92,81 of A 1 | 7,19 | 5,79 | 1942 |
| B 2 | 85,45 of A 1 | 14,55 | 7,86 | 1356 |
| B 3 | 78,45 of A 1 | 21,44 | 9,82 | 973 |
| B 4 | 92,63 of A 4 | 7,37 | 5,95 | 2270 |
| B 5 | 85,58 of A 4 | 14,42 | 7,94 | 1490 |

### Preparation of Cast Elastomers using the Prepolymers

All cast elastomers were prepared using Baytec^{®} XL 1604 from Bayer MaterialScience AG (3,5-diamino-4-chlorobenzoacid isobutylester) as curing agent. The prepolymer was stirred at 90°C while degasing until bubble free Baytec^{®} XL 1604 at 100°C was added while stirring was continued for 30 sec. The mixture was poured into an open mold with a temperature of 110°C and cured for 24 hours at 110°C.

The amounts and results are shown in Tables 3 and 4.

**Table 3 (comparative cast elastomers)**

| Example | | 1 * | 2* | 3* | 4* |
|---|---|---|---|---|---|
| Prepolymer | | A3 | A2 | A1 | A4 |
| amount of prepolymer (parts by weight) | | 100 | 100 | 100 | 100 |
| amount of Baytec® XL1604 (parts by weight) | | 20 | 15 | 10 | 10 |
| | | | | | |

| **casting time** | **[sec]** | **150** | **270** | **500** | **210** |
|---|---|---|---|---|---|
| **mechanical properties** | | | | | |
| Shore A (DIN 53505) | | 99 | 97 | 91 | 92 |
| Shore D (DIN 53505) | | 54 | 45 | 34 | 35 |
| stress at 100% strain (DIN 53504) | [MPa] | 17,37 | 12,37 | 8,13 | 7 |
| stress at 300% strain (DIN 53504) | [MPa] | 28,23 | 19,53 | 10,97 | 12 |
| ultimate tensile strength (DIN 53504) | [MPa] | 38,17 | 39,98 | 28,56 | 45 |
| elongation at breack (DIN 53504) | [%] | 395 | 481 | 603 | 680 |
| Graves (DIN 53515) | [kN/m] | 119 | 89 | 60 | 79 |
| rebound resilience (DIN 53512) | [%] | 49 | 46 | 52 | 43 |
| abrasion (DIN 53516) | [cbmm] | 56 | 49 | 46 | 70 |
| compression set 22°C (DIN53517) | [%] | 37,8 | 30 | 26,2 | 22 |
| compression set 70°C (DIN 53517) | [%] | 63,4 | 60,9 | 44,3 | 44 |

| | | | | | |
|---|---|---|---|---|---|
| ***comparative example** | | | | | |

**Table 4 (cast elastomers according to the invention)**

| Example | | 5 | 6 | 7 | 8 | 9 |
|---|---|---|---|---|---|---|
| prepolymer | | B1 | B2 | B3 | B4 | B5 |
| amount of prepolymer (parts by weight) | | 100 | 100 | 100 | 100 | 100 |
| amount of Baytec® XL 1604 (parts by weight) | | 15 | 20 | 25 | 15 | 20 |
| | | | | | | |

| **casting time** | **[sec]** | **420** | **465** | **540** | **240** | **285** |
|---|---|---|---|---|---|---|
| **mechanical properties** | | | | | | |
| Shore A (DIN 53505) | | 96 | 99 | 96 | 98 | 99 |
| Shore D (DIN 53505) | | 43 | 59 | 43 | 48 | 58 |
| stress at 100% strain (DIN53504) | [MPa] | 10,35 | 16,46 | 23,75 | 19,04 | 26,31 |
| stress at 300% strain (DIN 53504) | [MPa] | 17,24 | 31,86 | 17,24 | 33,49 | - |
| ultimate tensile strength (DIN 53504) | [MPa] | 30,49 | 32,68 | 32,38 | 34,27 | 33,07 |
| elongation at breack (DIN 53504) | [%] | 467 | 304 | 213 | 314 | 170 |
| Graves (DIN 53515) | [kN/m] | 73 | 86 | 119 | 91 | 94 |
| rebound resilience (DIN 53512) | [%] | 43 | 50 | 43 | 50 | 50 |
| abrasion (DIN 53516) | [cbmm] | 63 | 66 | 63 | 60 | 72 |
| compression set 22°C (DIN 53517) | [%] | 42,8 | 69,2 | 71,9 | 72,0 | 53,9 |
| compression set 70°C (DIN53517) | [%] | 65,4 | 93,6 | 94,4 | 72,1 | 83,0 |

As can be seen from the Tables in Example 1* the pouring time was only 150 seconds whereas in Example 6 the pouring time could be increased up to 465 seconds. In Example 5 the pouring time was 420 seconds compared to only 270 seconds in Example 2*. The longer pouring time allows larger and more complex parts to be prepared.

In Example 7 the pouring time was 540 seconds despite the fact that the prepolymer has a high NCO content. With the inventive prepolymers, elastomers with a high hardness can be prepared having enough pouring time at the same time.

## Claims

1. A polyurethane elastomer obtainable by reacting an NCO-terminated prepolymer based on 2,4'-diisocyanate diphenylmethane prepared by a process comprising the steps of
(a) reacting diisocyanate diphenylmethane including greater than 80% of 2,4'-diisocyanate diphenylmethane with a high molecular weight polyol selected from the group consisting of polyalkyleneether polyol with a number average molecular weight of 250 - 10000 and polyester polyol with a number average molecular weight of 250 - 10000 and mixtures thereof at a temperature of between 30°C and 150°C for a time sufficient to form the NCO-terminated prepolymer and to react the OH groups of the polyol in a ratio of NCO groups to OH groups of 1.5:1 to 20:1; and
(b) adding to the NCO-terminated prepolymer an aliphatic diisocyanate selected from the group consisting of the isomers of 1,1'-methylene-bis-(4-isocyanatocyclohexane), 1,4-cyclohexane diisocyanate, isophorone diisocyanate 1,3-xylylene diisocyanate, hexamethylene diisocyanate and the isomers of 1,1,4,4-tetramethylxylylene diisocyanate, mixtures thereof and prepolymers thereof; with
(c) a curingly effective amount of an aliphatic and/or aromatic di- or polyamine whereby the reactants are reacted in amounts such that the equivalent ratio of NCO groups to the sum of NCO-reactive groups is from 0.8:1 to 1.2:1.

2. A polyurethane elastomer according to Claim 1 wherein the di- or polyamine is selected from the group consisting of 4,4'-methylene-bis-(2-chloroaniline), 3,5-diamino-4-chlorobenzoeacid-isobutyl-ester, 4,4'-methylene-bis-(3-chloro-2,6-diethylaniline).

3. A process for the production of polyurethane elastomers by
(a) reacting diisocyanate diphenylmethane including greater than 80% of 2,4'-diisocyanate diphenylmethane with a high molecular weight polyol selected from the group consisting of polyalkyleneether polyol having a number average molecular weight of 250 - 10000 and polyester polyol having a number average molecular weight of 250 - 10000 and mixtures thereof at a temperature of between 30° C and 150° C for a time sufficient to form the NCO-terminated prepolymer and to react the OH groups of the polyol in a ratio of NCO groups to OH groups of 1.5:1 to 20:1; and
(b) adding to the NCO-terminated prepolymer an aliphatic diisocyanate selected from the group consisting of the isomers of 1,1'-methylene-bis-(4-isocyanatocyclohexane), 1,4-cyclohexane diisocyanate, isophorone diisocyanate, 1,3-xylylene diisocyanate, hexamethylene diisocyanate and the isomers of 1,1,4,4-tetramethylxylylene diisocyanate, mixtures thereof and prepolymers thereof; and
(c) reacting the mixture from step (b) with a curingly effective amount of an aliphatic and/or aromatic di- or polyamine whereby the reactants are reacted in amounts such that the equivalent ratio of NCO groups to the sum of the NCO-reactive groups is from 0.8:1 to 1.2:1.

4. Use of the polyurethane elastomer according to Claim 1 or 2 for electric encapsulation, wheels, rollers, doctor blades, hydrocyclones, sieves, sport tracks and bumpers.

## Patentansprüche

1. Polyurethanelastomer, das durch Umsetzen eines Präpolymers mit endständigem NCO auf der Basis von 2,4'-Diisocyanatodiphenylmethan erhältlich ist, das durch ein Verfahren hergestellt wurde, das folgende Schritte umfasst:
(a) Umsetzen von Diisocyanatodiphenylmethan, das mehr als 80 % 2,4'-Diisocyanatodiphenylmethan umfasst, mit einem hochmolekularen Polyol, das aus der aus Polyalkylenetherpolyol mit einem zahlenmittleren Molekulargewicht von 250 bis 10.000 und Polyesterpolyol mit einem zahlenmittleren Molekulargewicht von 250 bis 10.000 und Gemischen davon bestehenden Gruppe ausgewählt ist, bei einer Temperatur zwischen 30 °C und 150 °C über einen Zeitraum, der ausreicht, um das Präpolymer mit endständigem NCO zu bilden und die OH-Gruppen des Polyols in einem Verhältnis von NCO-Gruppen zu OH-Gruppen von 1,5:1 bis 20:1 umzusetzen; und
(b) Zusetzen eines aliphatischen Diisocyanats, das aus der aus den Isomeren von 1,1'-Methylen-bis(4-isocyanatocyclohexan), 1,4-Cyclohexandiisocyanat, Isophorondiisocyanat, 1,3-Xylylendiisocyanat, Hexamethylendiisocyanat und den Isomeren von 1,1,4,4-Tetramethylxylylendüsocyanat, Gemischen und Präpolymeren davon bestehenden Gruppe ausgewählt ist, zu dem Präpolymer mit endständigem NCO; mit
(c) einer zur Härtung wirksamen Menge eines aliphatischen und/oder aromatischen Di- oder Polyamins, wobei die Reaktanten in solchen Mengen umgesetzt werden, dass das Äquivalentverhältnis zwischen NCO-Gruppen und der Summe der mit NCO reaktiven Gruppen 0,8:1 bis 1,2:1 beträgt.

2. Polyurethanelastomer nach Anspruch 1, worin das Di- oder Polyamin aus der aus 4,4'-Methylen-bis(2-chloranilin), 3,5-Diamino-4-chlorbenzoesäureisobutylester und 4,4'-Methylen-bis(3-chlor-2,6-diethylanilin) bestehenden Gruppe ausgewählt ist.

3. Verfahren zur Herstellung von Polyurethanelastomeren durch
(a) Umsetzen von Diisocyanatodiphenylmethan, das mehr als 80 % 2,4'-Diisocyanatodiphenylmethan umfasst, mit einem hochmolekularen Polyol, das aus der aus Polyalkylenetherpolyol mit einem zahlenmittleren Molekulargewicht von 250 bis 10.000 und Polyesterpolyol mit einem zahlenmittleren Molekulargewicht von 250 bis 10.000 und Gemischen davon bestehenden Gruppe ausgewählt ist, bei einer Temperatur zwischen 30 °C und 150 °C über einen Zeitraum, der ausreicht, um das Präpolymer mit endständigem NCO zu bilden und die OH-Gruppen des Polyols in einem Verhältnis zwischen NCO-Gruppen und OH-Gruppen von 1,5:1 bis 20:1 umzusetzen; und
(b) Zusetzen eines aliphatischen Diisocyanats, das aus der aus den Isomeren von 1,1'-Methylen-bis(4-isocyanatocyclohexan), 1,4-Cyclohexandüsocyanat, Isophorondiisocyanat, 1,3-Xylylendiisocyanat, Hexamethylendiisocyanat und den Isomeren von 1,1,4,4-Tetramethylxylylendüsocyanat, Gemischen und Präpolymeren davon bestehenden Gruppe ausgewählt ist, zu dem Präpolymer mit endständigem NCO; und
(c) Umsetzen des Gemischs aus Schritt (b) mit einer zur Härtung wirksamen Menge eines aliphatischen und/oder aromatischen Di- oder Polyamins, wobei die Reaktanten in solchen Mengen umgesetzt werden, dass das Äquivalentverhältnis zwischen NCO-Gruppen und der Summe der mit NCO reaktiven Gruppen 0,8:1 bis 1,2:1 beträgt.

4. Verwendung eines Polyurethanelastomers nach Anspruch 1 oder 2 für elektrische Verkapselungen, Räder, Walzen, Rakeln, Hydrozyklone, Siebe, Sportbahnen und Stoßstangen.

## Revendications

1. Elastomère de polyuréthane pouvant être obtenu par la réaction d'un prépolymère à terminaisons NCO basé sur le 2,4'-diisocyanate diphénylméthane préparé par un procédé comprenant les étapes de
(a) réaction d'un diisocyanate diphénylméthane incluant plus de 80 % de 2,4'-diisocyanate diphénylméthane avec un polyol de haute masse moléculaire choisi dans le groupe consistant en un polyalkylèneétherpolyol ayant une masse moléculaire moyenne en nombre de 250-10 000 et un polyesterpolyol ayant une masse moléculaire moyenne en nombre de 250-10 000 et leurs mélanges à une température de 30°C à 150°C pendant une durée suffisante pour former le prépolymère à terminaisons NCO et pour faire réagir les groupes OH du polyol dans un rapport des groupes NCO aux groupes OH de 1,5:1 à 20:1 ; et
(b) addition au prépolymère à terminaisons NCO d'un diisocyanate aliphatique choisi dans le groupe consistant en les isomères du 1,1'-méthylène-bis-(4-isocyanatocyclohexane), 1,4-cyclohexane diisocyanate, isophorone diisocyanate 1,3-xylylène diisocyanate, hexaméthylène diisocyanate et les isomères du 1,1,4,4-tétraméthylxylylène diisocyanate, leurs mélanges et leurs prépolymères ; avec
(c) une quantité efficace pour le durcissement d'une di- ou polyamine aliphatique et/ou aromatique de sorte que les réactifs sont mis à réagir en des quantités telles que le rapport d'équivalents des groupes NCO à la somme des groupes réactifs avec NCO est de 0,8:1 à 1,2:1.

2. Elastomère de polyuréthane selon la revendication 1 où la di- ou polyamine est choisie dans le groupe consistant en la 4,4'-méthylène-bis-(2-chloroaniline), l'isobutylester d'acide 3,5-diamino-4-chlorobenzoïque, la 4,4'-méthylène-bis-(3-chloro-2,6-diéthylaniline).

3. Procédé pour la production d'élastomères de polyuréthane par
(a) réaction d'un diisocyanate diphénylméthane incluant plus de 80 % de 2,4'-diisocyanate diphénylméthane avec un polyol de haute masse moléculaire choisi dans le groupe consistant en un polyalkylèneétherpolyol ayant une masse moléculaire moyenne en nombre de 250-10 000 et un polyesterpolyol ayant une masse moléculaire moyenne en nombre de 250-10 000 et leurs mélanges à une température de 30°C à 150°C pendant une durée suffisante pour former le prépolymère à terminaisons NCO et pour faire réagir les groupes OH du polyol dans un rapport des groupes NCO aux groupes OH de 1,5:1 à 20:1 ; et
(b) addition au prépolymère à terminaisons NCO d'un diisocyanate aliphatique choisi dans le groupe consistant en les isomères du 1,1'-méthylène-bis-(4-isocyanatocyclohexane), 1,4-cyclohexane diisocyanate, isophorone diisocyanate 1,3-xylylène diisocyanate, hexaméthylène diisocyanate et les isomères du 1,1,4,4-tétraméthylxylylène diisocyanate, leurs mélanges et leurs prépolymères ; et
(c) réaction du mélange de l'étape (b) avec une quantité efficace pour le durcissement d'une di- ou polyamine aliphatique et/ou aromatique de sorte que les réactifs sont mis à réagir en des quantités telles que le rapport d'équivalents des groupes NCO à la somme des groupes réactifs avec NCO est de 0,8:1 à 1,2:1.

4. Utilisation de l'élastomère de polyuréthane selon la revendication 1 ou 2 pour l'encapsulation électrique, les roues, les rouleaux, les lames docteurs, les hydrocyclones, les tamis, les pistes de sport et les pare-chocs.
